**Europäisches Patentamt**

**European Patent Office**

**Office européen des brevets**

(11) Veröffentlichungsnummer : **0 372 475 B1**

(12) **EUROPÄISCHE PATENTSCHRIFT**

(45) Veröffentlichungstag der Patentschrift :
**08.04.92 Patentblatt 92/15**

(21) Anmeldenummer : **89122382.8**

(22) Anmeldetag : **05.12.89**

(51) Int. Cl.⁵ : **B23H 1/00**

(54) **Drahterodiermaschine.**

(30) Priorität : **08.12.88 DE 3841314**

(43) Veröffentlichungstag der Anmeldung :
**13.06.90 Patentblatt 90/24**

(45) Bekanntmachung des Hinweises auf die
Patenterteilung :
**08.04.92 Patentblatt 92/15**

(84) Benannte Vertragsstaaten :
**CH DE FR GB IT LI**

(56) Entgegenhaltungen :
**DE-A- 3 524 377**
**PATENT ABSTRACTS OF JAPAN vol. 9, no.**
**152 (M-391)(1875) 27 Juni 1985, & JP-A-60**
**29209 (MITSUBISHI DENKI KK) 14 Februar**
**1985,**

(73) Patentinhaber : **NASSOVIA**
**Werkzeugmaschinen GmbH**
**Nassoviastrasse 2**
**W-6070 Langen (DE)**

(72) Erfinder : **Popp, Konrad Josef**
**Ulmenweg 2**
**W-8903 Bobingen (DE)**
Erfinder : **Töpfer, Klaus**
**Im Espenloh 34**
**W-6087 Worfelden (DE)**

(74) Vertreter : **Allgeier, Kurt et al**
**Postfach 14 27**
**W-7888 Rheinfelden (DE)**

EP 0 372 475 B1

Jouve, 18, rue Saint-Denis, 75001 PARIS

## Beschreibung

Die Erfindung betrifft eine Drahterodiermaschine in Portalbauweise, wie diese beispielsweise in Manfred Feuerer, "Elektroerosive Metallbearbeitung", Würzburg 1983, auf Seite 31, Bild 2.10 b, dargestellt und auf Seite 30 unten erwähnt ist. Ferner sind auf den Seiten 29 und 30 die hohen Anforderungen an Steifigkeit, Schwingungsfestigkeit und thermischer Stabilität im einzelnen geschildert, welche an die Auslegung der Maschinenkonstruktion gestellt werden müssen.

Am besten bewährt haben sich hier die Portalbauweisen, weil bei diesen höhere Starrheit und ein größeres Dämpfungsvermögen und somit Schwingungsarmut erreichbar ist, als bei Maschinenständern mit offenem C-Gestell.

Nach dem Stand der Technik besteht das Maschinengestell bei der Portalbauweise in der Regel aus beidseitig des Maschinenbetts im Abstand voneinander angeordneten Seitenständern, die durch die Portalbrücke zu einem geschlossenen Rahmen verbunden sind. Da Drahterodiermaschinen in unterschiedlichen Größen und Ausmaßen benötigt und hergestellt werden, erfordert dies stets die Konzeption verschieden groß ausgelegter Portal-Maschinengestelle.

Wegen der immer mehr verschiedenartigen Bearbeitungsaufgaben solcher Maschinen kommt es vor, daß z. B. für kleinere Werkstücke mit großer Dicke in den x- und y-Achsen nur kleinere Schlittenbewegungen erforderlich sind, jedoch wegen der großen Dickenunterschiede größere Hübe in der z-Achse und auch hohe Leistungen benötigt werden. Umgekehrt kommen auch Werkstücke von großer Länge vor, bei denen eine größere Anzahl von flächenverteilten kleinen Öffnungen bearbeitet werden müssen. Daher werden Maschinen mit kleineren Schlittenbewegungen in der x-Achse und mit größeren Schlittenbewegungen in der y-Achse und mit unterschiedlich großen Schlittenbewegungsbereichen in der z-Achse benötigt.

Wegen der im Erodiermaschinenbau serienmäßig festgelegten Größenklassen dieser Maschinen können die Schlittenbewegungsbereiche und damit auch die Leistungsbereiche entsprechend diesen sehr stark unterschiedlichen Anforderungen an die Bearbeitungserfordernisse nicht genügend berücksichtigt werden.

Aus diesen Gegebenheiten leitet sich die Aufgabe der Erfindung dahingehend ab, durch ein gegliedertes Baugruppensystem unterschiedlich ausgelegte selbständige und austauschbare Baugruppeneinheiten in der Weise kompatibel auszubilden, daß diese zu individuell an die Bearbeitungsaufgaben anpaßbare Maschinenkonzeptionen abwandelbarer Dimensionierung zusammengestellt werden können, ohne daß die Starrheit und Schwingungsfestigkeit des Maschinengestells beeinträchtigt wird.

Ausgehend von einer Drahterodiermaschine in Portalbauweise mit einem Maschinenbett, mit zwei Seitenständern und einer Portalbrücke, einem Werkstückaufspann-Tischrahmen, oberhalb desselben einem oberen Kragarm mit einer Drahtumlenkführung, unterhalb desselben einem unteren Kragarm mit einer Drahtumlenkführung, mit steuerbaren Antrieben versehene Führungsschlitten und -schieber zur Relativverschiebung der Kragarme in den x-, y- und z-Achsen gegenüber dem Werkstückaufspann-Tischrahmen besteht die Erfindung aus dem im Kennzeichnungsteil des Patentanspruchs 1 angegebenen Merkmalen.

Durch die Gliederung des Gesamt-Maschinengestelle in diebeiden Gestell-Baugruppen Portalständer und Portalbrücke ergeben sich bedeutende Fertigungsvorteile, und es ist ferner möglich, auf einen gegebenen Portalständer z. B. eine leichtere oder schwerere Portalbrücke aufzusetzen. Ferner können der obere und der untere Schlittenführungsschieber in der x-Achse baugleich sein. Außerdem ist es möglich, schwerere oder leichtere Führungsschlitten für die x-Achse einzusetzen.

Weitere Vorteile ergeben sich auch für die Führungsschlitten in den y-Achsen. Auch hier können leichtere und schwerere Ausführungen bei sonst baugleichem Maschinenaufbau verwendet oder diese nachträglich ausgetauscht werden.

Der Portalständer als erste Baugruppeneinheit kann aus einem Maschinenbett und beidseits einstückig mit diesem verbundenen Portalwangen bestehen; es kann auch zweckmäßig sein, den Portalständer mehrstückig aus starr miteinander verbundenen Teilen herzustellen, beispielsweise aus einem Maschinen-Mittelbett und beidseitigen Seitenbetten mit den Portalwangen. Diese Herstellungsweise wird bei besonders großen Maschinen vorzugsweise anwendbar sein. Ferner ermöglicht es diese Bauweise, die beiden Seitenbetten mit seitlich ausschwingenden Portalwangen zu versehen, so daß der Führungsschlittenhub in der x-Achse verlängert werden kann.

Weitere vorteilhafte Merkmale ergeben sich aus den nachgeordneten Patentansprüchen 5 bis 10. Durch die Lösbarkeit der starren Verbindungen zwischen den Portalwangen und der Portalbrücke, kann die letztere ausgetauscht werden, z. B. zur Überarbeitung der Führungen. Es ist aber auch möglich, eine Portalbrücke gegen eine größere oder längere bzw. kleinere oder kürzere auszutauschen, falls dies z. B. zur Durchführung von großen Bearbeitungen in dicken Werkstücken zweckmäßig erscheint.

Schließlich sind mit dem erfindungsgemäßen Aufbau des Maschinengestells auch in der Fertigung zusätzliche Vorteile verbunden, weil verschiedene Ausführungen in größeren Bauserien aufgelegt und jeweils im Bedarfsfall zu weitgehend des Bearbeitungserfordernissen angepaßten Maschinenausbildungen zusammengebaut werden können.

Die großen Vorteile des modularen Aufbaues des Gesamt-Maschinengestells einschließlich der Führungsschlitten und der Kragarme beschränken sich nicht auf die Austauschbarkeit der einzelnen Komponenten bzw. Elemente, sondern heben sich insbesondere gegenüber einem weiteren Stand der Technik ab, der DE-PS 20 52 123. Dort ist gemäß Fig. 1 ein erster Kreuzschlitten in Portalbauweise in der y-Achse und an diesem angeordnet ein zweiter Kreuzschlitten in der x-Achse verschiebbar. Der letztere ist ferner mit vier weiteren Schlittenführungen versehen, und zwar jeweils einem für die u- und die v-Achse, für die z-Achse sowie einer Vertikalführung für den unteren Drahtführungskopf. Diese Maschinenkonfiguration erfordert somit sechs Schlittenführungen, von denen die u- und die v-Führungen zur Erzeugung von Bahnkurven mit konischen Schnittflächen dienen. Die Bewegungsmöglichkeit des u-Schlitten ist beschränkt, da er von der am x-Schlitten angeordneten Halterung mit Schlittenführung für den unteren Drahtführungskopf behindert wird.

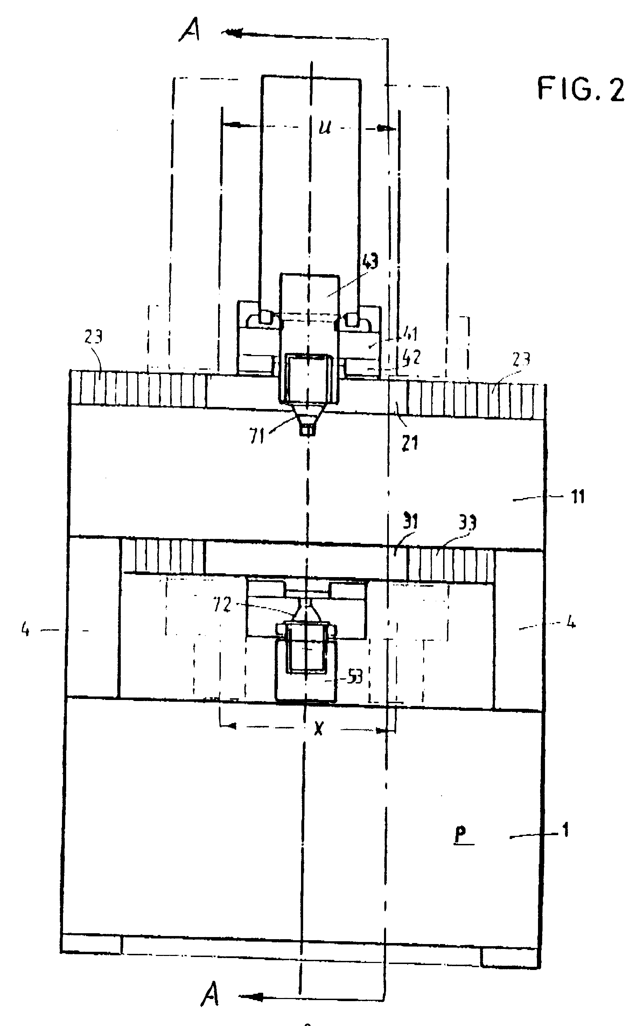

In noch stärkerem Maße ergibt sich eine Behinderung nach der Konfiguration gemäß Fig. 2. Dort sind zwei komplette Kreuzschlitten für die x- und y-Achse vorhanden; hinzu kommen die z-Führung und die Führung für den unteren Drahtführungskopf. Hier behindern sich die beiden x-Schlitten in ihrer Bewegungsmöglichkeit gegenseitig. Diese Behinderungen entfallen bei dem Erfindungsgegenstand, und es besteht der weitere Vorteil, daß in den x- bzw. u-Achsen und den y- bzw. v-Achsen in den meisten Bauelemente der Kreuzschlitten baugleich sein können.

Weitere Wesensmerkmale und Einzelheiten der Erfindung sind anhand des in der Zeichnung dargestellten Ausführungsbeispiels beschrieben und näher erläutert.

Es zeigen

Fig. 1 eine perspectivische Ansicht der Drahterodiermaschinach der Erfindung;

Fig. 2 die Vorderansicht der Maschine;

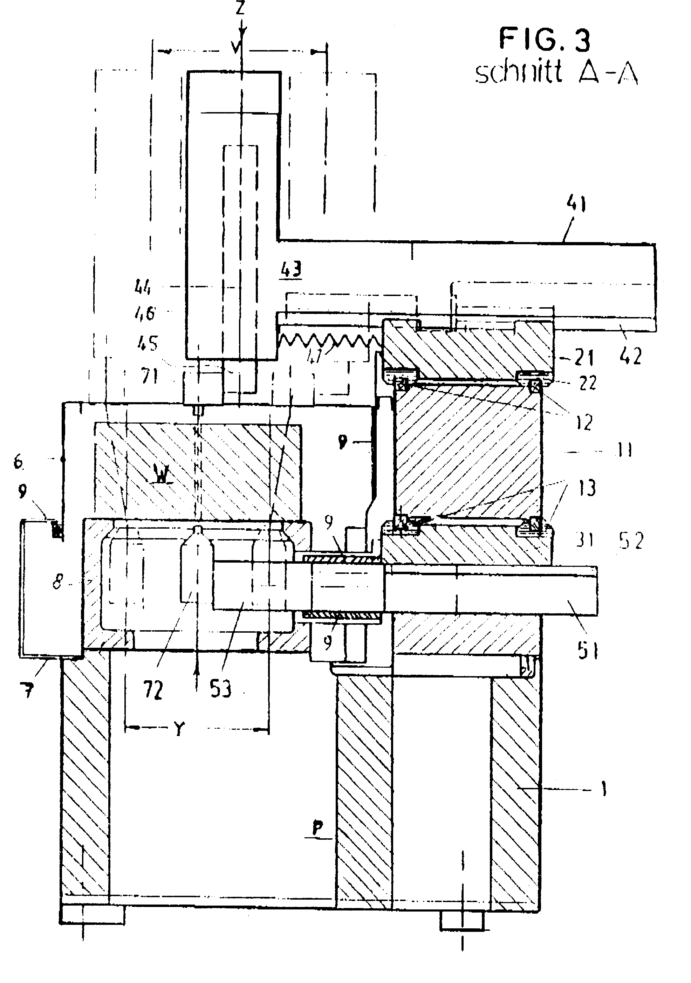

Fig. 3 einen Schnitt A-A der Maschine gemäß Fig. 2;

Fig. 4, 5 und 6 die Portalbrücke in Vorderansicht sowie in Schnittdarstellungen;

Fig. 7 die Portalbrücke mit den Schlittenführungselementen;

Fig. 8 das Maschinenbett mit den Portalwangen;

Fig. 9 das Maschinenbett gemäß Fig. 8 in dreiteiliger Ausführung;

Fig. 10 das dreiteilige Maschinenbet in abgewandelter Ausführung;

Fig. 11 das Maschinen-Mittelbett und die Seitenwangen in der Ausführung gemäß Fig. 10.

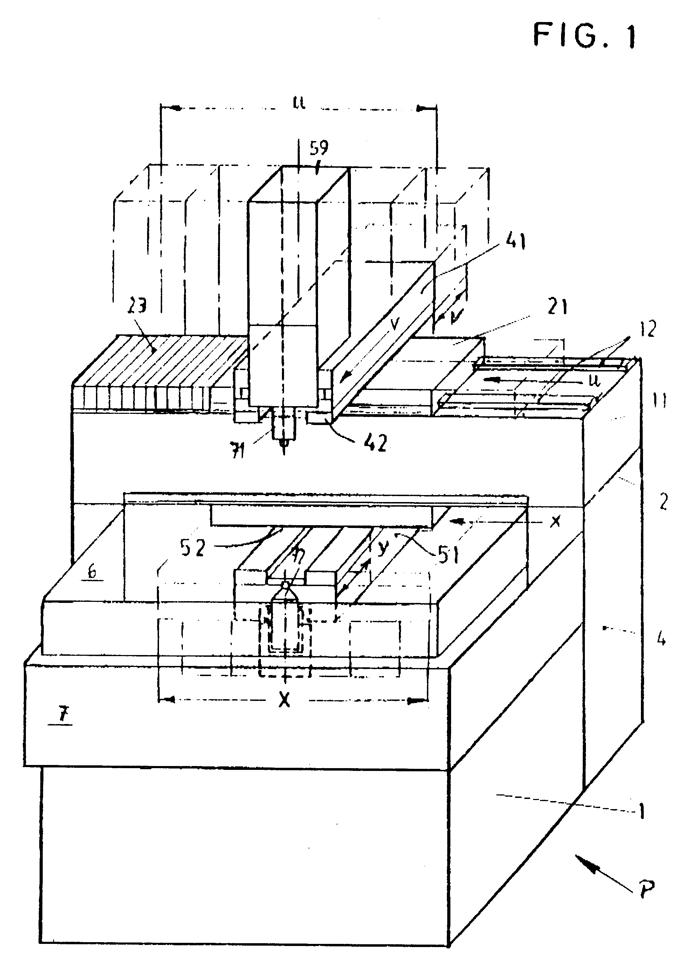

In Fig. 1 ist der Portalständer mit P bezeichnet, der aus dem Maschinenbett 1 mit den beidseitigen Portalwangen 2 besteht. Mit den Portalwangen 2 ist die Portalbrücke 11, starr, jedoch, lösbar verbunden.

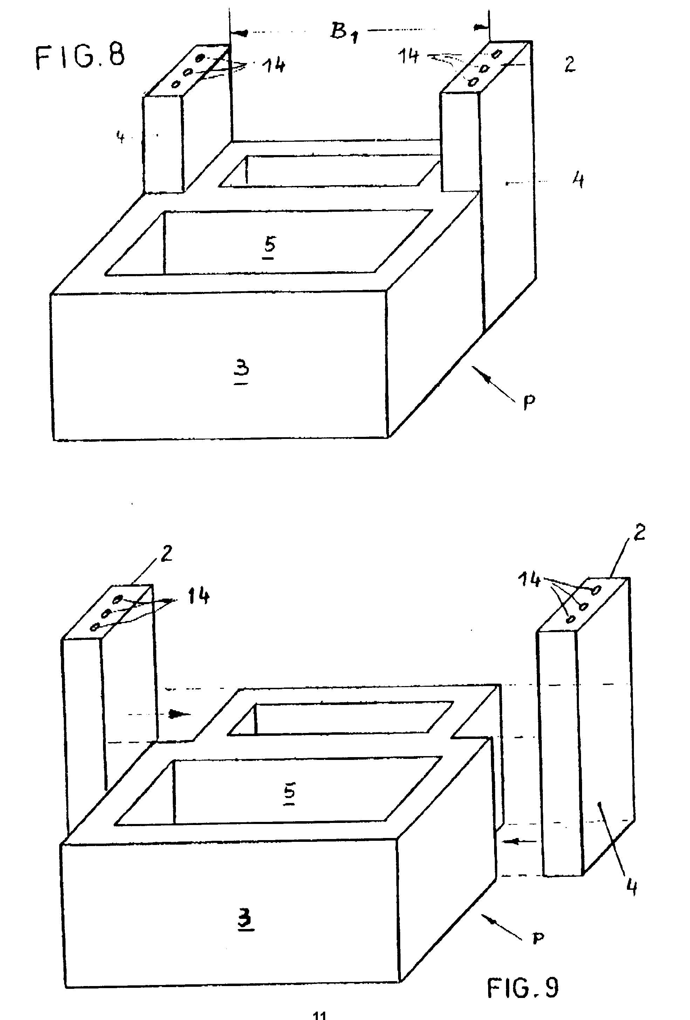

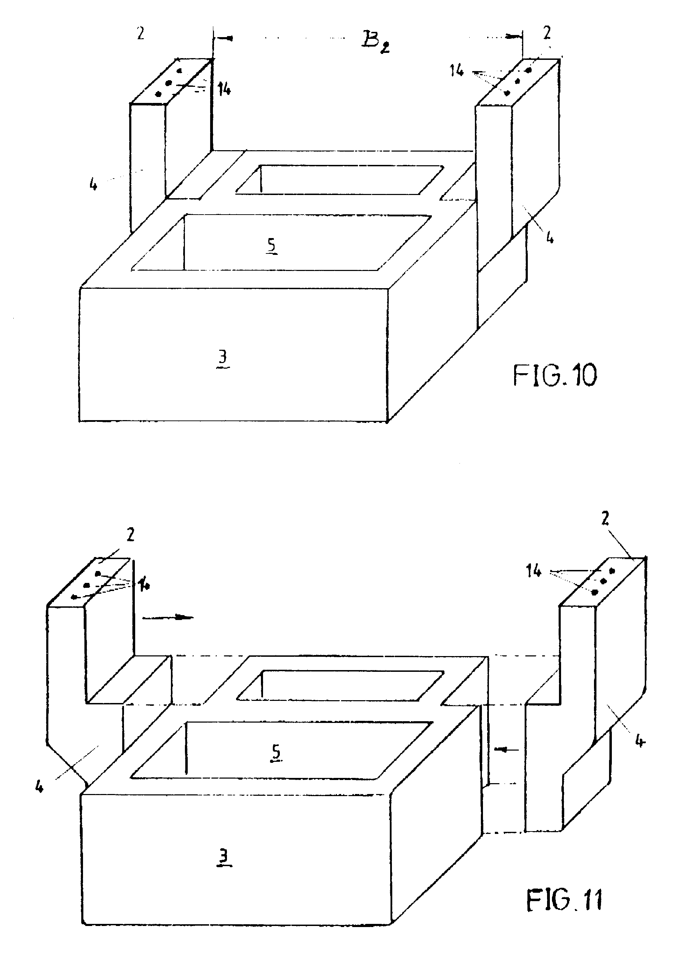

Der Portalständer P kann aus einem Stück, beispielsweise aus Mineralguß bestehen. Wie aus den Fig. 8 bis 11 ersichtlich ist, kann, vor allem bei großen Maschinen, der Portalständer P auch aus drei Teilen hergestellt sein, und zwar aus einem Maschinen-Mittelbett 3 und zwei beidseitigen Seitenbetten 4 mit den Portalwangen 2. Wenn die Seitenwangen 2 gegenüber den Seitenbetten 4 beidseitig nach außen abgekröpft sind, wie in Fig. 10 und 11 dargestellt, dann können die Führungsschlittenhübe x und u beidseitig auf $B_2$ verlängert werden. Aus den Fig. 8 bis 11 ist auch erkennbar, daß das Maschinenbett 1 als Hohlkasten ausgebildet ist, wobei der Innenraum 5 zur Aufnahme eines absenkbaren Hubbehälters 6 und Aggregaten zur Schneiddraht-Zu- oder Abführung dienen kann. Auf dem Maschinenbett 1 ist eine Vorrichtung zum Aufspannen von Werkstücken oder Werkstückpaletten angebracht, der als Werkstückaufspann-Tischrahmen 8 gemäß Fig. 2 ausgebildet ist.

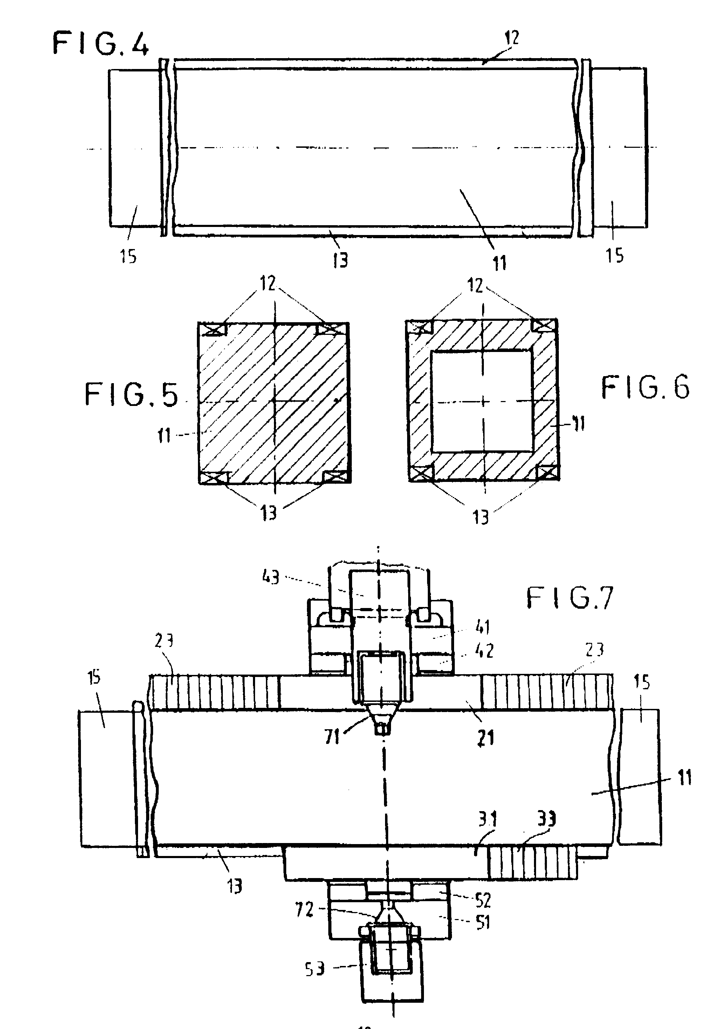

Die Portalbrücke 11 als selbständige Baueinheit ist vorzugsweise als quaderförmiger Voll- und Hohlkörper geformt, wie in den Fig. 4 bis 6 dargestellt; sie kann jedoch auch als Raumfachwerk gestaltet sein. Die Portalbrücke ist ferner austauschbar und mittels der Anschlußvorrichtungen 14 an die Seitenwangen 2 starr anschließbar, um unterschiedliche Maschinenauslegungen zu ermöglichen. Die Portalbrücke 11 ist an ihrer Ober- und Unterseite mit den Führungen 12 und 13 für die x- und u-Achse versehen. In diesen Führungsbahnen sind die jeweils selbständigen Baugruppen bildenden oberen und unteren Führungsschlitten 21 und 31 in den x- und u-Achsen mittels nicht dargestellter rechnergesteuerter Antriebe verschiebbar.

Am unteren Führungsschlitten 31 ist der untere Führungsschieber 51 in der y-Achse in Führungsschieber-Elementen gelagert, welcher in den unteren Kragarmen 53 ausläuft, an dem der untere Drahtführungskopf als Drahtumlenkungsführung 72 angeordnet ist. Der untere Kragarm 53 ist mittels der Dichtung 9 gegenüber dem unteren Führungsschlitten 31 und dem Maschinenbett abgedichtet.

Am oberen Führungsschlitten 21 ist Mittels der Führungsschieber-Elemente 42 der obere Führungsschieber 41 gelagert, der in den waagrechten Kragarm 43 ausläuft, an welchem im senkrechten Kragarm 59 in der Pinolenführungsbahn 46 der Pinolenführungsschieber 45 in der z-Achse 44 gelagert ist. Am Pinolenführungsschieber 45 ist der obere Drahtführungskopf als Drahtumlenkungsführung 71 gelagert.

In den Fig. 4 bis 7 sind Ausführungsbeispiele der einzelnen Baugruppen bzw. Bau-Elemente dargestellt, für welche die oben genannten Bezugszeichen für die einzelnen Baumerkmale gelten.

**Patentansprüche**

1. Drahterodiermaschine in Portalbauweise mit

a) einem Maschinenbett (1,3) mit zwei Portalwangen (2) enthaltenden Seiten betten (4) und einer Portalbrücke (11),

b) einem Werkstückaufspann-Tischrahmen (8),

c.1) oberhalb desselben einem oberen Kragarm (43) mit einer Drahtumlenkführung (71),

c.2) unterhalb desselben einem unteren Kragarm (53) mit einer Drahtumlenkführung (72),

d) mit steuerbaren Vorschubantrieben versehene Führungsschlitten und -schieber (21,31,41,45,51) zur Relativverschiebung der Kragarme (43,53) in den x-, y- und z-Achsen gegenüber dem Werkstückaufspann-Tischrahmen (8)

gekennzeichnet durch

e) einen ein- oder mehrteiligen, eine erste Baugruppeneinheit bildenden Portalständer (P),

f) eine ein- oder mehrteilige, eine zweite selbständige Baueinheit bildende, austauschbare, auf den Portalständer (P) aufsetzbare und mit diesem starr verbindbare Portalbrücke (11),

f.1) je einen oberhalb und unterhalb der Portalbrücke (11) in Führungen (12, 13) in der x-Achse verschiebbaren austauschbaren, eine dritte und eine vierte selbständige Baugruppe bildenden Führungsschlitten (21, 31),

f.2) an den Führungsschlitten (21, 31) der dritten und vierten Baugruppe angeordnete, in den y-Achsen verschiebbare als selbständige auslauschbare Einheilen ausgebildete Führungsschieber (41, 51) und mit diesen verbundene obere und untere Kragarme (43, 53), die mit Drahtführung- und -umlenkorganen verschen sind.

2. Drahterodiermaschine nach Anspruch 1, dadurch gekennzeichnet, daß der Portalständer als erste Baugruppeneinheit aus einem Maschinenbett (1) und beidseits einstückig mit diesem verbundenen, mit Anschlußflächen und -vorrichtungen zur starren Verbindung mit der Portalbrücke (11) versehenen Portalwangen (2) besteht.

3. Drahterodiermaschine nach Anspruch 1, dadurch gekennzeichnet, daß der Portalständer (P) aus drei starr miteinander verbundenen Teilen besteht, und zwar aus einem Maschinen-Mitellbett (3) und beidseitigen Seitenbetten (4) mit den Portalwangen (2), die mit Auschlußflächen und -vorrichtungen (14) zur starren Verbindung mit der Portalbrücke (11) verschen sind.

4. Drahterodiermaschine nach Anspruch 1, dadurch gekennzeichnet, daß die einstückige Portalbrücke (11) beidendig mit Anschlußflächen und -vorrichtungen (14) zur starren, Verbindung mit den Portalwangen (2) des Portalständers (P) sowie mit ober- und unterseitig angebrachten, in der x-Achse verlaufenden Führungen (12, 13) für die Führungsschlitten (21, 31) in der x-Achse versehen ist.

5. Drahterodiermaschine nach den Ansprüchen 2 bis 4, dadurch gekennzeichnet, daß die Anschlußvorrichtungen (14) zur starren Verbidung zwischen den Portalwangen (2) und der Portalbrücke (11) lösbar ausgebildet sind.

6. Drahterodiermaschine nach Anspruch 1, dadurch gekennzeichnet, daß die Führungsschlitten (21, 31) baugleich sind.

7. Drahterodiermaschine nach Anspruch 1, dadurch gekennzeichnet, daß der obere und der untere austauschbare Führungsschieber in den y-Achsen (41, 51) jeweils in oberen und unteren Führungsschieber-Elementen (42, 52) in den oberen und unteren y und v-Achsen verschiebar sind.

8. Drahterodiermaschine nach den Ansprüchen 1 und 7, dadurch gekennzeichnet, daß an den oberen Führungsschieber in der y-Achse (41) ein Kragarm (43) angebracht ist, der eine Pinolenführungsbahn (46) in der z-Achse (44) aufweist, in welcher der Pinolenführungsschieber (45) geführt ist, an dessen unterem Ende in einem Drahtführungskopf (71) die obere Drahtführungs- und Umlenkvorrichtung angeordnet ist.

9. Drahterodiermaschine nach den Ansprüchen 1 und 7, dadurch gekennzeichnet, daß an den unteren Führungsschieber in der y-Achse (51) ein Kragarm (53) angebracht ist, der mit einer in einem Drahtführungskopf (72) angeordneten unteren Drahtführungs- und Umlenkvorrichtung versehen ist.

10. Drahterodiermaschine nach einem oder mehreren der Ansprüche 1 bis 9, dadurch gekennzeichnet, daß die Vorschubantriebe der in den x- und y-Koordinanten verschiebbaren oberen und unteren Führungsschlitten (21, 31) und Führungsschieber (41, 51) mit ihren oberen und unteren Kragarmen (43, 53) und Drahtführungsköpfen (71, 72) rechnergesteuert sowohl im Gleichlauf als auch in beiden Koordinaten (x, y) in horizontaler Ebene in beliebig wähl- und programmierbarer Relativversetzung zwischen dem oberen und dem unteren Drahtführungskopf (71, 72) antreibbar und positionierbar sind.

**Revendications**

1. Machine d'électro-érosion à fil en construction portique comportant

a) un banc de machine (1, 3) avec deux bancs latéraux (4) renfermant des joues à portique (2), et avec un pont-portique,

b) un cadre de table (8) pour monter la pièce à usiner,

c. 1) au-dessus de ce cadre, un bras en porte à faux supérieur (43) avec guide de renvoi à fil (71),

c. 2) au-dessous de ce cadre, un bras en porte à faux inférieur (53) avec guide de renvoi à fil (72),

d) des glissoirs et coulisses de guidage (21, 31, 41, 45, 51), équipés des entraînements d'avance réglables, pour le déplacement relatif des bras en porte à faux (43, 53) en axes 'x', 'y' et 'z' par rapport au cadre de table (8) pour monter la pièce à usiner,

caractérisée par

e) un support à portique (P) monobloc ou multiple formant un premier ensemble,

f) un pont-portique (11) monobloc ou multiple, parfaitement échangeable et formant un deuxième ensemble indépendant qui pourra se poser sur le support à portique (P) et se lier rigidement à ce support,

f1) un glissoir (21, 31) chacun, au-dessus et au-dessous du pont-portique (11) dans des guides (12, 13), déplaçable en axe 'x', échangeable et formant un troisième et un quatrième ensembles indépendants,

f2) des coulisses de guidage (41, 51) disposées aux glissoirs (21, 31) des troisième et quatrième ensembles, déplaçables en axes 'y' et réalisées comme unités indépendantes et échangeables ainsi que des bras en porte à faux supérieur et inférieur (43, 53) reliés à ces coulisses et munis des organes pour le guidage et le renvoi du fil.

2. Machine d'électro-érosion à fil selon revendication 1, caractérisée par ce que le support à portique comme premier ensemble, comporte un banc de machine (1) et des joues à portique (2) disposées des deux côtés, chacune reliée à ce banc comme élément monobloc et munie des faces et dispositifs de raccordement pour l'assemblage rigide au pont-portique (11).

3. Machine d'électro-érosion à fil selon revendication 1, caractérisée par ce que le support à portique (P) comporte trois éléments rigidement joints l'un à l'autre, soit un banc de machine central (3) et des bancs latéraux (4), disposés des deux côtés, avec les joues à portique (2) ayant des faces et dispositifs de raccordement (14) pour l'assemblage rigide au pont-portique (11).

4. Machine d'électro-érosion à fil selon revendication 1, caractérisée par ce que le pont-portique (11) monobloc a été muni, des deux côtés, des faces et dispositifs de raccordement (14) pour l'assemblage rigide aux joues à portique (2) du support à portique (P) ainsi que des guides (12, 13) disposés en axe 'x' aux faces supérieure et inférieure, guides destinés aux glissoirs (21, 31) également en axe 'x'.

5. Machine d'électro-érosion à fil selon revendications 2 à 4, caractérisée par ce que les dispositifs de raccordement (14) pour l'assemblage rigide des joues à portique (2) au pont-portique (11) ont été réalisés comme éléments amovibles.

6. Machine d'électro-érosion à fil selon revendication 1, caractérisée par ce que les glissoirs (21, 31) sont de construction identique.

7. Machine d'électro-érosion à fil selon revendication 1, caractérisée par ce que la coulisse de guidage supérieure et la coulisse de guidage inférieure (41, 51) en axes 'y', parfaitement échangeables, pourront se déplacer, chacune, en des éléments à coulisse de guidage supérieur et inférieur (42, 52) en axes 'y' et 'v' supérieur et inférieur.

8. Machine d'électro-érosion à fil selon revendications 1 et 7, caractérisée par ce qu'au glissoir supérieur (41) en axe 'y', un bras en porte à faux (43) a été monté qui présente une glissière à fourreau (46) en axe 'z' (44) guidant la coulisse de guidage à fourreau (45) au bout inférieur de laquelle a été disposé le dispositif supérieur pour le guidage et le renvoi du fil dans une tête de guidage à fil (71).

9. Machine d'électro-érosion à fil selon revendications 1 et 7, caractérisée par ce qu'à la coulisse de guidage inférieure en axe 'y' (51), un bras en porte à faux (53) a été installé qui comporte un dispositif inférieur pour le guidage et le renvoi du fil disposé dans une tête de guidage à fil (72).

10. Machine d'électro-érosion à fil selon une seule ou plusieurs des revendications 1 à 9, caractérisée par ce que les entraînements d'avance des glissoirs (21, 31) supérieur et inférieur ainsi que des coulisses de guidage (41, 51), tous déplaçables en coordonnées 'x' et 'y', avec leurs bras en porte à faux (43, 53) supérieur et inférieur ainsi que avec leurs têtes de guidage à fil (71, 72), pourront être actionnés et positionnés sous contrôle d'ordinateur aussi bien dans le même sens que dans les deux coordonnées (x, y) sur le plan horizontal, c'est-à-dire en déplacement relatif choisible et programmable à volonté entre la tête de guidage à fil supérieure et la tête de guidage à fil inférieure (71, 72).

EP 0 372 475 B1

**Claims**

1. Wire electrical discharge machine in portal design comprising
a) a machine bed (1, 3) with two lateral beds (4) containing portal cheeks (2) and a portal bridge,
b) a table frame (8) for clamping the workpiece,
c. 1) above same, an upper bracket (43) with a wire deflection guide (71),
c. 2) below same, a lower bracket (53) with a wire deflection guide (72),
d) guide saddles and guiding slides (21, 31, 41, 45, 51), provided with controllable feed drives, for the relative shift of the brackets (43, 53) in the x-, y- and z-axis, as referred to the table frame (8) for clamping the workpiece,
characterized by
e) a portal base (P), solid or segmented, forming a first modular unit,
f) a portal bridge (11), solid or segmented, forming a second independent modular unit which can be interchanged, placed on the portal base (P) and rigidly connected to this base.
f. 1) one each guide saddle (21, 31) above and below the portal bridge (11), shifting in guides (12, 13) in the x-axis, interchangeable and forming a third and fourth independent modular unit,
f. 2) guiding slides (41, 51), arranged at the guide saddles (21, 31) of the third and fourth modular unit, shifting in the y-axis and designed as independent and interchangeable units as well as upper and lower brackets (43, 53), connected to these slides, which have been provided with devices for wire guiding and wire deflection.

2. Wire electrical discharge machine acc. to claim 1, characterized in that the portal base, as a first modular unit, comprises a machine bed (1) and portal cheeks (2) which have solidly been connected to this bed at both sides and provided with assembly faces and devices for the rigid connection to the portal bridge (11).

3. Wire electrical discharge machine acc. to claim 1, characterized in that the portal base (P) comprises three rigidly connected parts viz. a central machine bed (3) and double sided lateral beds (4) with the portal cheeks (2) showing assembly faces and devices (14) for the rigid connection to the portal bridge (11).

4. Wire electrical discharge machine acc. to claim 1, characterized in that the solid portal bridge (11) has at both ends been provided with assembly faces and devices (14) for the rigid connection to the portal cheeks (2) of the portal base (P) as well as with guides (12, 13), arranged on the upper and lower side in the x-axis, for the guide saddles (21, 31) in the x-axis.

5. Wire electrical discharge machine acc. to claims 2 to 4, characterized in that the assembly devices (14) for the rigid connection between the portal cheeks (2) and the portal bridge (11) have been designed as detachable units.

6. Wire electrical discharge machine acc. to claim 1, characterized in that the design of the guide saddles (21, 31) is identical.

7. Wire electrical discharge machine acc. to claim 1, characterized in that the upper and lower interchangeable guiding slide (41, 51) in y-axis, each in upper and lower slide elements (42, 52), can be shifted in the upper and lower y- and v-axes.

8. Wire electrical discharge machine acc. to claims 1 and 7, characterized in that a bracket (43) has been fitted to the upper guiding slide (41) in the y-axis, that this bracket shows a sleeve slideway (46) in the z-axis (44) guiding the sleeve slide (45) and further that, at the lower end of this slide, the upper wire guiding and deflecting device has been arranged in a wire guide head (71).

9. Wire electrical discharge machine acc. to claims 1 and 7, characterized in that a bracket (53) has been fitted to the lower guiding slide (51) in the y-axis and provided with a lower wire guiding and deflecting device arranged in a wire guide head (72).

10. Wire electrical discharge machine acc. to one or several of the claims 1 to 9, characterized in that the feed drives of the upper and lower guide saddle (21, 31) and of the guiding slides (41, 51), shifting in the x- and y-coordinates, with their upper and lower bracket (43, 53) and wire guide heads (71, 72), can be run and positioned under computer control both in parallel and horizontally in the two coordinates (x, y), viz. in any discretionary and programmable relative shift between upper and lower wire guide head (71, 72).

6

FIG. 1

FIG. 2

FIG. 3
schnitt A-A

FIG.4

FIG.5

FIG.6

FIG.7

FIG.8

FIG.9

FIG.10

FIG.11